# EUROPÄISCHE PATENTANMELDUNG

(11) **EP 1 020 321 A2**
(43) Veröffentlichungstag der Anmeldung: **19.07.2000**
(21) Anmeldenummer: 99118952.3
(22) Anmeldetag: 27.09.1999
(51) Int. Cl.: B60N 2/46

(54) **Abnehmbare Armlehne für Kraftfahrzeuge**

(30) Priorität: 28.09.1998 DE 19844340; 28.09.1998 DE 29823670 U
(71) Anmelder: Hoffmann, Matthias, 99439 Vippachedelhausen (DE)
(72) Erfinder: Die Erfindernennung liegt noch nicht vor
(74) Vertreter: Liedtke, Klaus, Dr.

(57) **Zusammenfassung**

Die Erfindung betrifft eine abnehmbare Armlehne für Kraftfahrzeuge, die ein zwischen Fensterscheibe und Dichtungsgummi anzubringendes Halteteil und eine Auflagefläche aufweist.

Erfindungsgemäß gelingt die Lösung der Aufgabe dadurch, daß mindestens die Auflagefläche (4) aus einem Kunststoffteil besteht, welches mit einem Halteteil verbunden ist, and dem mindestens eine Einhängelasche (1) angebracht ist, und daß die Auflagefläche mit einem Stützteil verbunden ist.

## Beschreibung

Die Erfindung betrifft eine abnehmbare Armlehne für Kraftfahrzeuge, die ein zwischen Fensterscheibe und Dichtungsgummi anzubringendes Halteteil und eine Auflagefläche aufweist.

Die Armlehne ist für den Einsatz in Kraftfahrzeugen unterschiedlicher Hersteller und Bauarten geeignet. Sie kann sowohl auf der Fahrer- als auch auf der Beifahrerseite in einfacher Weise angebracht werden.

Bei Kraftfahrzeugen sind Armablagen, die in der Türverkleidung integriert sind, üblich. Sie sind nicht abnehmbar und deshalb auch nicht auf die individuellen Körpermaße und Gewohnheiten der Fahrer oder Beifahrer angepaßt. Bei längeren Fahrten ist die Benutzung dieser Armablagen in der Regel unbequem, weil sie an einem festen Ort angebracht sind, der vom Fahrer nicht beeinflußt werden kann.

In DE 91 11 360 U 1 ist eine Armstütze für den Autoinnenbereich beschrieben, die an einer Einhängelasche zwischen Fenster und Fensterdichtung eingehängt werden kann. Zielstellung ist dabei, die Armlehne so anzubringen, daß der Fahrer den linken Arm bequem in Höhe der oberen Türverkleidung ablegen kann. Vorteilhaft ist dabei, daß die Armlehne leicht angebracht und abgenommen werden kann, wobei auch eine gewisse Anpassung des Auflageortes in waagerechter Richtung möglich ist. Nachteilig ist dabei jedoch, daß die Armlehne nur eine schmale Auflagefläche aufweist, so daß diese Armstütze zwar die Möglichkeit bietet, den Arm während der Fahrt aufzulegen, aber die Auflage für den Arm insbesondere bei längeren Fahrten unbequem ist.

Eine weitere Autotür-Armstütze ist nach DE 297 11 897 U 1 bekannt, an der ebenfalls eine zwischen Fensterscheibe und Dichtungsgummi einzuklemmende Klemmkante angebracht ist. Die Armstütze ist einstückig ausgeführt und besitzt eine ebene Auflagefläche, die mit Hilfe einer gebogenen Anschlagkante an der Türinnenfläche abgestützt wird. Die Auflagekraft wird durch eine Anschlagkante an die Verkleidung der Autotür gedrückt. Die Auflage ist mit Halterungen für Visitenkarten, Klammern, Kugelschreiber und dergleichen versehen. Auch diese Ausführung ermöglicht nur eine unbequeme Ablage des Armes.

Der Erfindung liegt die Aufgabe zugrunde, eine Armlehne der eingangs genannten Art anzugeben, mit der ein hoher Komfort insbesondere bei längere Benutzung der Armlehne erreicht wird, die an eine Vielzahl von Kraftfahrzeugtypen einsetzbar ist und die mit geringem Aufwand herstellbar ist.

Erfindungsgemäß wird die Aufgabe mit den kennzeichnenden Merkmalen von Anspruch 1 gelöst.

Vorteilhafte Ausgestaltungen sind in den Unteransprüchen angegeben.

Die Erfindung wird im Folgenden an einem Ausführungsbeispiel näher erläutert. In den zugehörigen Zeichnungen zeigen:
- Figur 1: die Vorderansicht einer einteiligen Armlehne,
- Figur 2: eine Seitenansicht der Armlehne,
- Figur 3: eine Draufsicht der Armlehne,
- Figur 4: eine Armlehne in zweiteiliger Ausführung,
- Figur 5: eine Ausführungsform für das Mittelteil mit einer Einstellkalotte,
- Figur 6: das Anbringen einer verstellbaren Armlehne in drei Phasen,
- Figur 7: eine Ausführungsform mit angeschraubtem Stützteil,
- Figur 8: eine perspektivische Darstellung einer Ausführung mit verschiebbarem Stützteil in Draufsicht,
- Figur 9: eine perspektivische Darstellung der Ausführung nach Figur 8 von unten gesehen,
- Figur 10: einen Längsschnitt durch die Anordnung nach den Figuren 8 und 9,
- Figur 11: ein Blechbiegeteil in drei Ansichten,
- Figur 12: die Ausführung nach den Figuren 8 und 9 in zwei Ansichten und einem Schnitt
und
- Figur 13: das Stützteil dieser Ausführung in drei Ansichten.

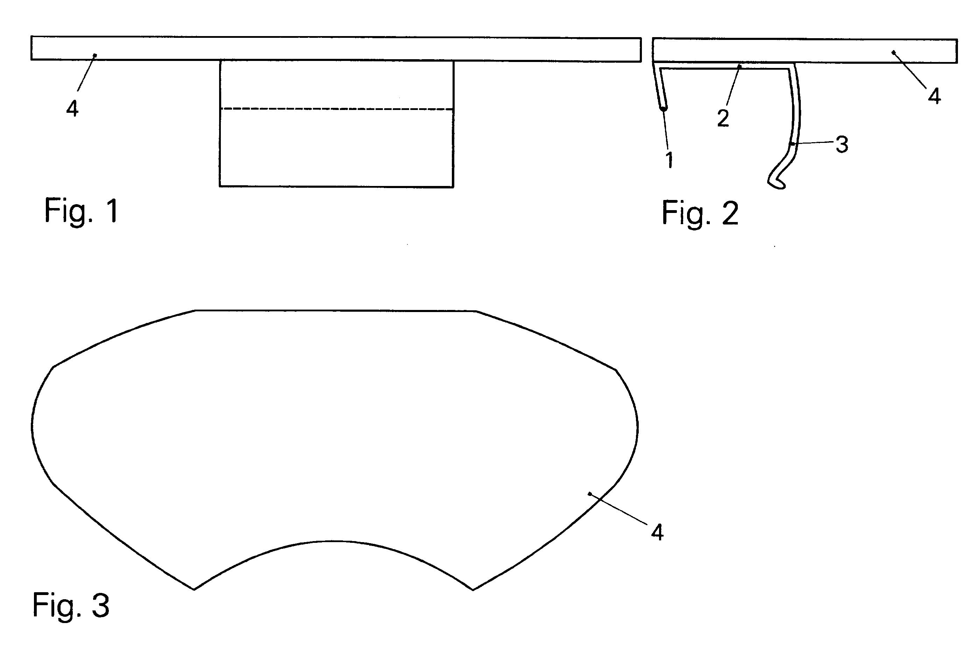

In den Figuren 1 bis 3 ist eine erste Ausführungsform für eine erfindungsgemäße Armlehne dargestellt. Die Armlehne ist aus Kunststoff hergestellt und in einem Teil gefertigt. Sie besteht aus einer Einhängelasche 1, einem Mittelteil 2 und einem Stützteil 3. Die Einhängelasche 1 wird zwischen Fensterscheibe und Dichtungsgummi eingeführt. Auf dem Mittelteil 2 ist eine gepolsterte Auflage 4 angebracht, durch die eine bequeme und entspannte Halterung des Armes möglich wird. Das Mittelteil 2 bildet mit dem Stützteil 3 und der Einhängelasche 1 eine Einheit. Das klammerartige Stützteil 3 umschließt die Türverkleidung und leitet die vom Arm aufgebrachten Auflagekräfte an die Türverkleidung ab. Damit wird gewährleistet, daß die Armlehne nicht verrutschen kann. Die einfache Bauweise gestattet sowohl eine kostengünstige Herstellung der Armlehne als auch einen universellen Einsatz der Armlehne in unterschiedlichen Pkw- und Lkw-Typen ohne das problemlose Öffnen und Schließen der Seitenscheiben zu behindern. Sie kann ohne Veränderungen auf der Fahrer- sowie auf der Beifahrerseite angebracht werden.

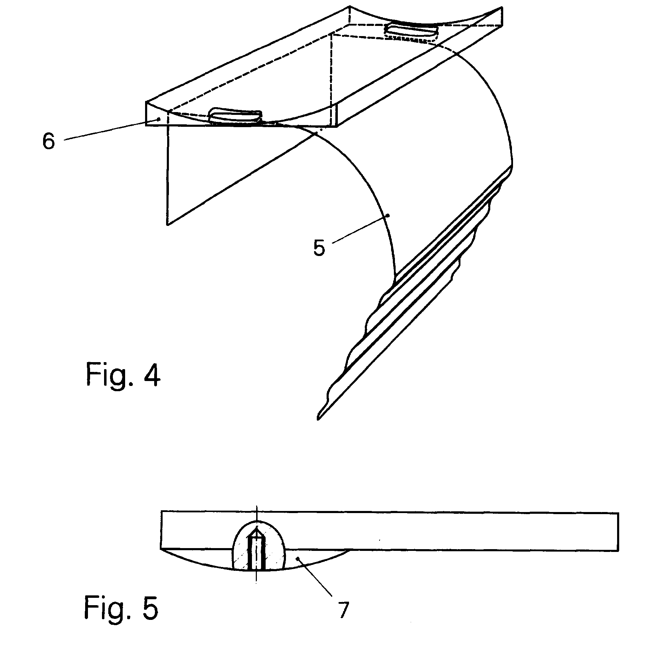

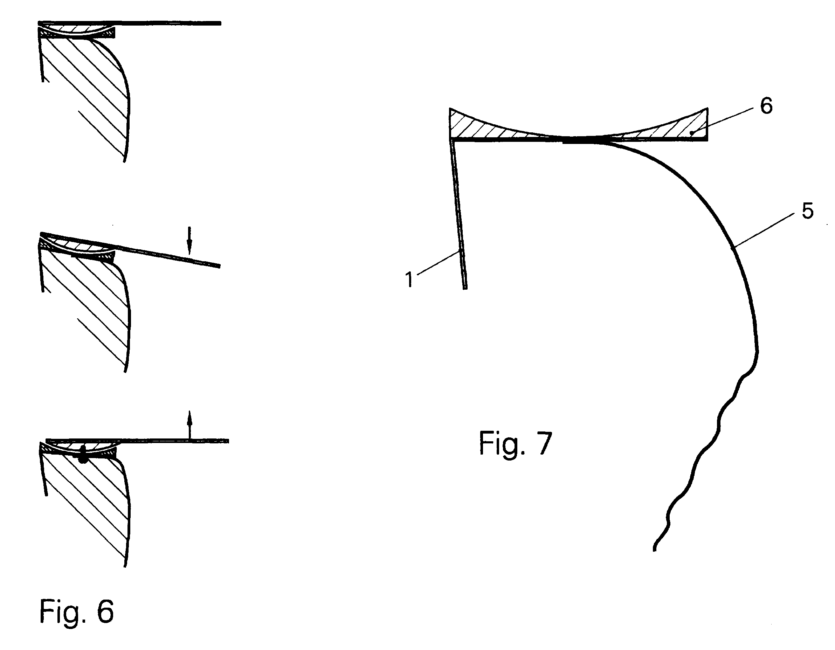

In den Figuren 4 bis 7 ist eine Ausführungsform für eine Armlehne dargestellt, bei der eine universelle Einstellmöglichkeit gewährleistet wird. Die Armlehne besteht aus zwei miteinander verschraubten Teilen. Ein unteres Teil beinhaltet das Klemmteil 5, mit dem das Kalottenteil 6 fest verbunden ist. Auf das Kalottenteil 6 kann das in Figur 5 dargestellte Auflageteil 7 geschraubt werden. Das Auflageteil 7 besitzt hierzu an seiner Unterseite einen weizenförmigen Ansatz, der in dem Kalottenteil 6 eingebracht werden kann und dort eine Winkelverstellung des Auflageteils 7 ermöglicht. Die gewünschte Winkelverstellung kann mit Hilfe von Schrauben, welche durch das Kalottenteil 6 in den dortigen Langlöchern geführt und im Auflageteil 7 in den dort angebrachten Gewindebohrungen eingeschraubt werden. Eine besonders günstige Ausführung ergibt sich dadurch, daß für das Klemmteil 5 eine geringe Anzahl von Auswechselteilen mitgeliefert wird, so daß das Anpassen an fast alle Autotürvarianten ermöglicht wird. Die vom Anwender einfach durchzuführende Montage ist in Figur 6 erläutert. Bei der Montage werden zunächst die für die Breite und Form der Innenverkleidung des Fahrzeuges entsprechende Klemme 5 ausgebildet und danach das Auflegeteil 7 große von der Unterseite angeschraubt. Anschließend wird die Klammer 5 in die Türverkleidung gedrückt und das Auflageteil 7 in die waagerechte Position gerückt. Anschließend erfolgt das endgültige Festziehen der Befestigungsschrauben.

In Figur 7 ist eine Ausführungsmöglichkeit dargestellt, bei der das Klemmteil 5 an dem Kalottenteil 6 angebracht ist, wobei das Kalottenteil mit der Einhängelasche 1 einstückig ausgeführt ist.

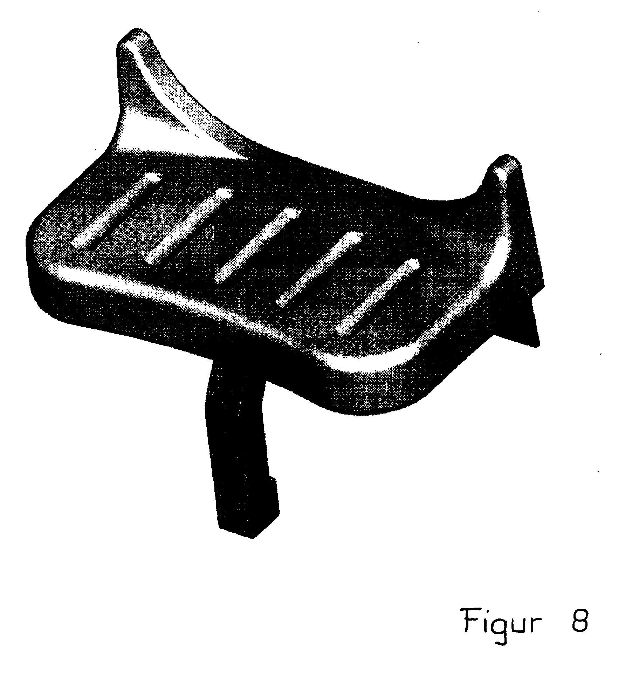

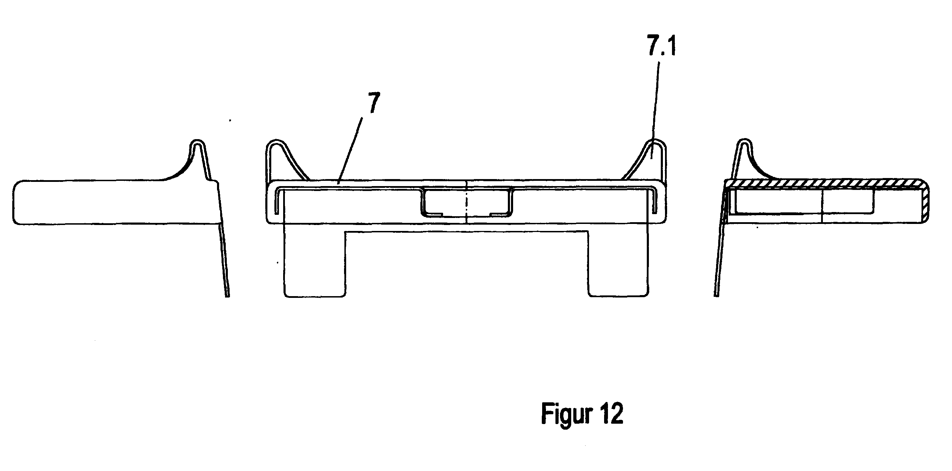

Die Figuren 8 bis 13 erläutern eine Ausführungsform, bei der das Stützteil 3 im Mittelteil 2 in Richtung zur Tür verschoben und damit in einfacher Weise an jede Tür angepaßt werden kann.

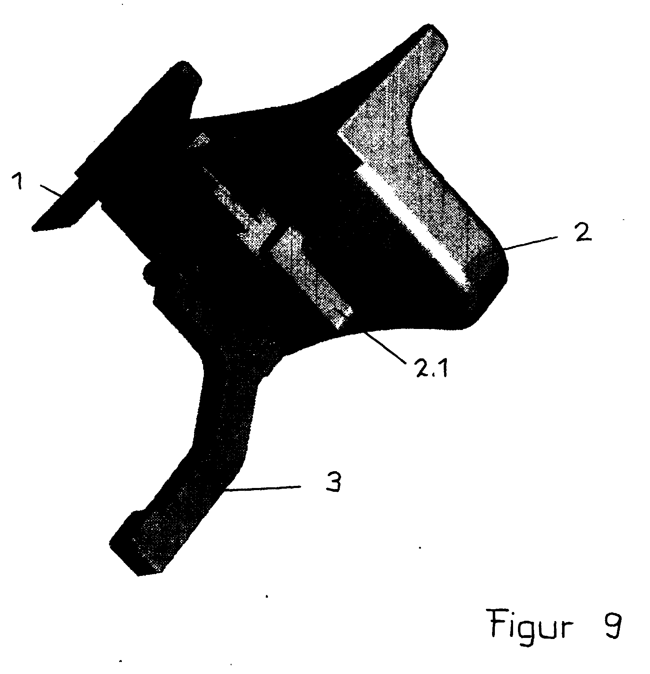

Die Figuren 8 und 9 zeigen die Armlehne in perspektivischer Ansicht, wobei Figur 8 eine Draufsicht darstellt und in Figur 9 eine Sicht von unter erläutert. In Figur 9 sind das Stützteil 3 und das Mittelteil 2 getrennt dargestellt. Das Mittelteil 2 ist in einem Teilschnitt abgebildet, in dem der Führungsschlitz 2.1 zur Bewegung des Stützteils 3 in einer Schnittfläche ersichtlich ist.

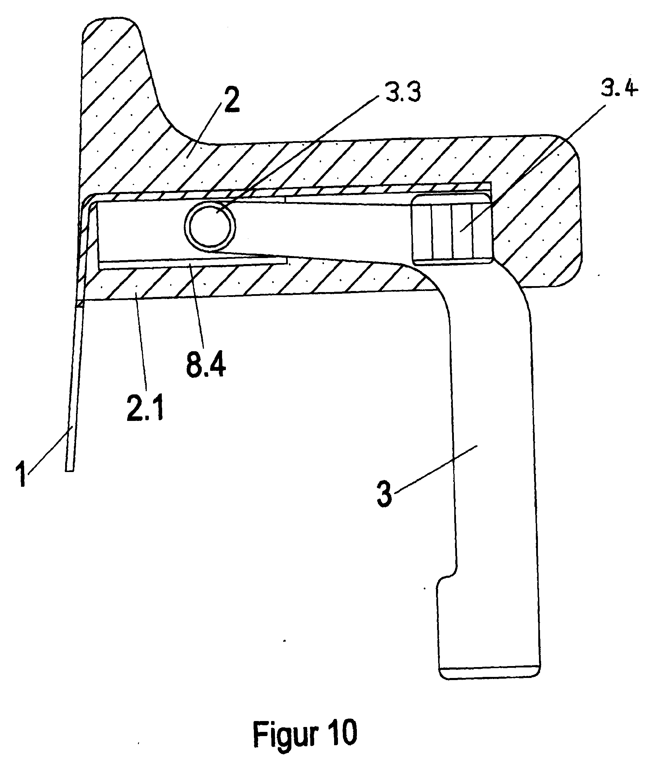

Figur 10 zeigt einen Schnitt durch die Gesamtanordnung. Zur Verschiebung des Stützteils 3 weist dessen waagerechter Schenkel 3.1 zwei Ansätze 3.3 und 3.4 auf, die im Führungsschlitz des Mittelteils 2 gleiten können.

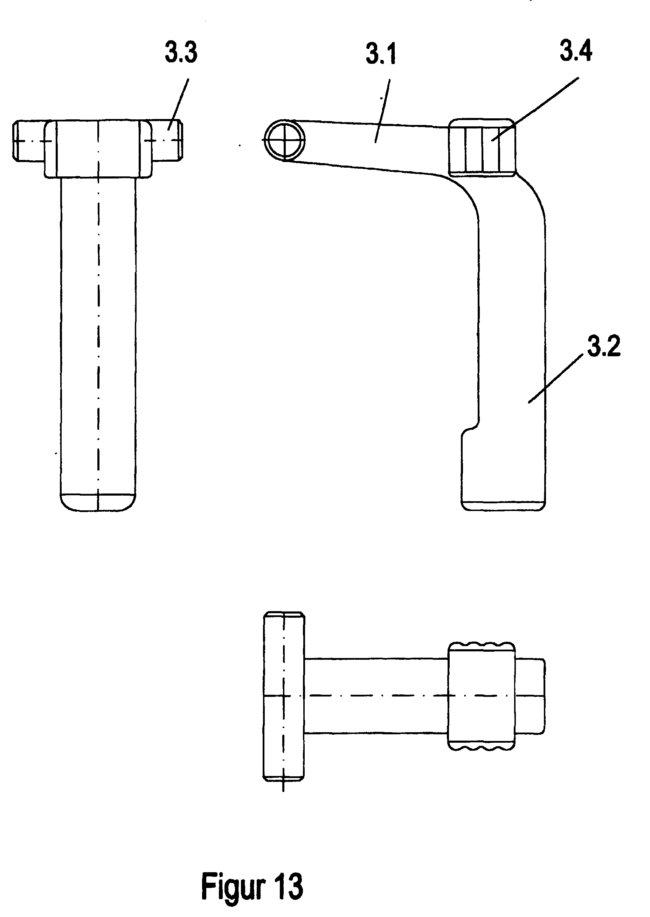

Das in Figur 13 in drei Ansichten dargestellte Stützteil 3 besteht aus einem waagerechten Schenkel 3.1 und einem senkrechten Schenkel 3.2. Der senkrechte Schenkel 3.2 ist mit einer Anlagefläche 3.5 versehen, die an der Verkleidung der Fahrzeugtür anliegt. Der waagerechte Schenkel 31. trägt am Ende zwei Zapfen 3.3, die in den Führungsschlitz 2.1 im Mittelteil 2 eingreifen.
Das Mittelteil 2 besteht aus einem Kunststoffteil, in das ein Biegeteil 8 aus Metall eingelegt ist. Im dargestellten Beispiel wurde das Biegeteil 8 mit Kunststoff umspritzt. Aus dem Kunststoff ragen die beiden Einhängelaschen 1 heraus, die nach unten gebogen sind und das Halteteil bilden, welches zwischen Scheibe und Türverkleidung geschoben wird.

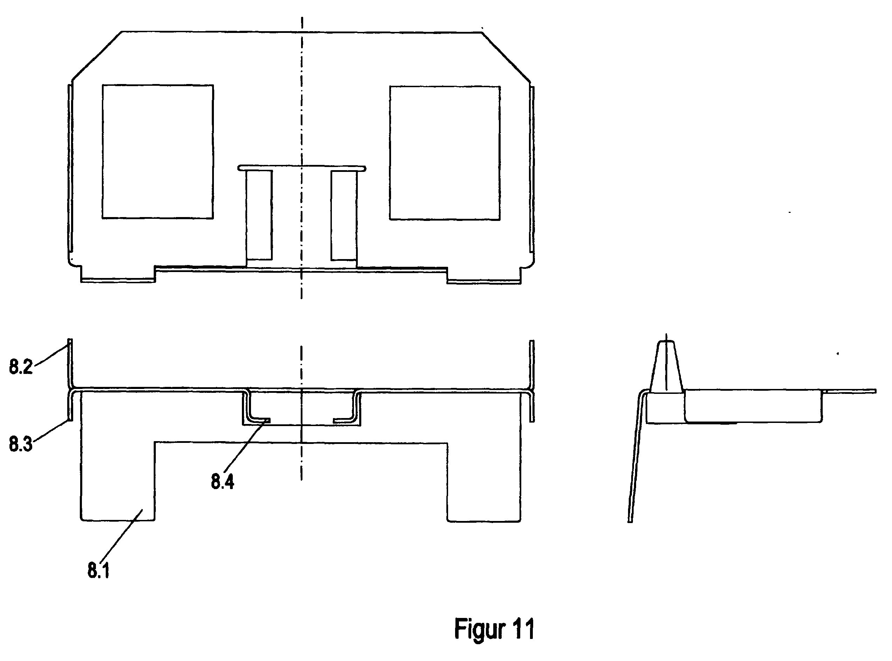

Das Biegeteil 8 ist in Figur 11 dargestellt. Es ist im Bereich 8.1 der Einhängelaschen mit einer vor Korrosion schützenden Beschichtung versehen. Die Beschichtung ermöglicht auch ein problemloses Gleiten der Fensterscheiben an diesen Teilen. Am Biegeteil 8 sind außerdem zwei Stützlaschen 8.2 angebracht, die nach oben gebogen werden und beim Umspritzen die Ansätze 7.1 des am Mittelteils 2 sich befindenden Auflageteils 7 stabilisieren. Die Versteifungslaschen 8.3 versteifen die Auflagefläche des Kunststoffteils und die zweifach gebogenen Führungslaschen 8.4 verstärken die Führungsnut, in der die Zapfen 3.3 des Stützteils 3 gleiten.

Am hinteren Bereich des waagerechten Stützteilschenkels 3.1 sind Verbreiterungen in Form von Noppen 3.4 angebracht, welche im hinteren Bereich des im Mittelteil 3 angeordneten Führungsschlitzes 2.1 gleiten können. Der hintere Teil des Führungsschlitzes 2.1 weist eine geringere Breite als der vordere Teil auf, in dem die Zapfen 3.3 gleiten. Die Zapfen 3.3 sind dabei länger als die Noppen 3.4 ausgebildet. Durch die Noppen 3.4 wird eine leichte Schwergängigkeit bei der Verschiebung des Stützteils 3 bewirkt, so daß ein unbeabsichtigtes Verstellen des Stützteils 3 vermieden wird. Es wird dadurch gewährleistet, daß nach der Montage die eingestellte Position sicher erhalten bleibt. Eine vorteilhafte Ausgestaltung sieht vor, daß der Führungsschlitz 3.3 am hinteren Ende der verbreiterten Bereichs eine nach unten gerichtete Öffnung aufweist, durch die das Stützteil 3 bei der Montage eingeführt werden kann.

Ein besonderer Vorzug der erfindungsgemäßen Armlehne besteht darin, daß diese an alle Fahrzeuge sowohl auf der Fahrer als auch an der Beifahrerseite universell anpaßbar ist, so daß ein angenehmes und entspanntes Fahren möglich ist. An keinem Teil des Fahrzeuges müssen Teile geschraubt oder geklebt werden. Bei richtiger Anwendung können die Seitenscheiben manuell oder automatisch ohne Probleme geöffnet und wieder geschlossen werden. Es treten auch keine Beeinträchtigungen des Sidebags auf.

### BEZUGSZEICHENLISTE

1 Einhängelasche
2 Mittelteil
   2.1 Führungsschlitz
3 Stützteil
   3.1 waagerechter Stützteilschenkel
   3.2 senkrechter Stützteilschenkel
   3.3 Zapfen
   3.4 Noppen
   3.5 Anlagefläche
4 gepolsterte Auflage
5 Klemme
6 Kalottenteil
7 Auflageteil
   7.1 Ansatz
8 Biegeteil
   8.1 Einhängelaschenteil
   8.2 Stützlasche
   8.3 Versteifungslaschen
   8.4 Führungslaschen

## Patentansprüche

1. Abnehmbare Armlehne für Kraftfahrzeuge, die ein zwischen Fensterscheibe und Dichtungsgummi anzubringendes Halteteil und eine Auflagefläche aufweist, **dadurch gekennzeichnet**, daß mindestens die Auflagefläche aus einem Kunststoffteil besteht, welches mit einem Halteteil verbunden ist, an dem mindestens eine Einhängelasche (1) angebracht ist, und daß die Auflagefläche mit einem Stützteil (3) verbunden ist.

2. Armlehne für Kraftfahrzeuge nach Anspruch 1, **dadurch gekennzeichnet**, daß die Auflagefläche an einem Mittelteil (2) angeordnet ist, das eine dem Ellenbogen physiologisch entsprechende Auflagefläche aufweist.

3. Armlehne für Kraftfahrzeuge nach Anspruch 1 oder 2, **dadurch gekennzeichnet**, daß auf der am Mittelteil (2) ausgebildeten Auflagefläche ein Auflagepolster (4) angebracht ist.

4. Armlehne für Kraftfahrzeuge nach einem der Ansprüche 1 bis 3, **dadurch gekennzeichnet**, daß das Mittelteil (2) an einem aus Stützteil (3) und Halteteil bestehendem Kunststoffteil befestigt ist.

5. Armlehne für Kraftfahrzeuge nach Anspruch 3 oder 4, **dadurch gekennzeichnet**, daß die Teile lösbar miteinander verbunden sind.

6. Armlehne für Kraftfahrzeuge nach einem der vorhergehenden Ansprüche, **dadurch gekennzeichnet**, daß das Mittelteil (2) an dem aus Stützteil (3) und Halteteil bestehendem Kunststoffteil mittels einer Verschraubung befestigt ist und an dem Mittelteil (2) Langlöcher zur Anpassung der Befestigung angebracht sind.

7. Armlehne für Kraftfahrzeuge nach einem der Ansprüche 1 bis 3, **dadurch gekennzeichnet**, daß das Stützteil (3) in einer Führung im Mittelteil (2) in Richtung zur Fahrzeugtür verschiebbar angeordnet ist.

8. Armlehne für Kraftfahrzeuge nach Anspruch 7, **dadurch gekennzeichnet**, daß in Mittelteil (2) ein Führungsschlitz (2.1) angeordnet ist, in dem am Stützteil (3) angebrachte Ansätze (3.3, 3.4) geführt werden.
